# EUROPEAN PATENT APPLICATION

(11) **EP 4 357 097 A1**
(43) Date of publication of application: **24.04.2024**
(21) Application number: 22825087.4
(22) Date of filing: 17.06.2022
(51) Int. Cl.: B29B 11/16, B29B 15/08, B29K 105/12, D06B 3/02, D06M 101/40, C08J 5/24, D06M 15/55

(54) **SELF-ASSEMBLED CARBON FIBER BUNDLES, METHOD FOR PRODUCING SAME, PREPREG AND METHOD FOR PRODUCING SAME**

(30) Priority: 18.06.2021 JP 2021101844; 18.06.2021 JP 2021101845; 18.06.2021 JP 2021101846; 26.10.2021 JP 2021174789
(71) Applicant: Mitsubishi Chemical Corporation, Chiyoda-ku Tokyo 100-8251 (JP)
(72) Inventor: IKEDA, Masashi, Tokyo 100-8251 (JP); TSUJIKAWA, Kazuki, Tokyo 100-8251 (JP); ISHIKAWA, Takeshi, Tokyo 100-8251 (JP); MATSUI, Jun, Tokyo 100-8251 (JP)
(74) Representative: Vossius & Partner Patentanwälte Rechtsanwälte mbB
(86) International application number: PCT/JP2022/024336
(87) International publication number: WO 2022/265099

(57) **Abstract**

A prepreg including a thermosetting resin composition and a self-assembled carbon fiber bundle impregnated with the thermosetting resin composition.

## Description

### Technical Field

The present invention relates to a self-assembled carbon fiber bundle (hereinafter sometimes referred to as "SACFB") and its producing method, and a prepreg using SACFB as a reinforcement and its producing method.

### Background Art

CFRP (Carbon Fiber Reinforced Plastic), which is a fiber-reinforced plastic using carbon fiber as a reinforcement, is a lightweight material with excellent mechanical properties suitable for parts of automobiles, ships, railcars, manned aircrafts, unmanned aircrafts and other transportation equipment. The importance of CFRP has been increasing in recent years.

In a known method of efficiently producing CFRP products, for example, they are compression molded from a prepreg such as a sheet molding compound (SMC). A prepreg is an intermediate material having a structure in which a fiber reinforcement is impregnated with a matrix comprising an uncured thermosetting resin composition.

The fiber reinforcement used in a CF-SMC is a carbon fiber mat formed by cutting a continuous carbon fiber bundle into chopped carbon fiber bundles and spreading them on a carrier film (for example, Patent Literature 1).

The continuous carbon fiber bundle is produced by carbonizing a polyacrylonitrile fiber bundle comprising mechanically bundled fiber filaments. The continuous carbon fiber bundle is sized so that carbon fibers are kept bundled.

A continuous carbon fiber bundle with a large bundle size, such as 48K, called a large tow, has high production efficiency. On the other hand, some applications, including CF-SMC, require carbon fiber bundles with small bundle sizes, eg, 6K or less. Under these circumstances, a technique for dividing a large tow into a plurality of tows has been developed (Patent Literature 2).

A method for producing carbon fiber pellets for use in the production of fiber-reinforced thermoplastics (FRTP) by mixing cut carbon fibers with a solution or a suspension of a sizing agent, pelletizing the resulting agglomerates using a rotating disk pelletizer, and then drying the resulting pellets has been proposed (Patent Literature 3).

A phenomenon has been reported that by adding a small amount of chloroform to water in which short carbon fibers having a length of 3 to 5 mm are dispersed and shaking vigorously, the short carbon fibers agglomerate and form needle-like bundles by self-assembly. A group that reported this phenomenon described that carbon fibers recycled from waste materials can be used again as raw materials for high-performance materials by bundling them using this phenomenon (Non-Patent Literature 1).

PTL 1: JPH1-163218A
PTL 2: U.S. Patent No. 6385828
PTL 3: JPH10-503812A
NPTL 1: J. R. Baxter, G. R. Palmese, N. J. Alvarez, Applied Materials Today, 20 (2020) 100786

### Summary of Invention

### Technical Problem

The present invention has been made with the aim to accomplish at least one of the following tasks.
- To provide a novel technique for using a continuous carbon fiber bundle as a raw material to easily produce a short carbon fiber bundle having a bundle size smaller than that of the continuous carbon fiber bundle.
- To provide a technique for producing a carbon fiber bundle that can be easily used as a reinforcement for FRP, from carbon fibers recovered from CFRP scraps or prepreg offcuts.
   - To provide novel reinforcements for thermosetting prepregs.
- To provide a novel thermosetting prepreg using an SACFB as a reinforcement and a method for producing the same.

This specification may explicitly or implicitly indicate problems that can be solved by each embodiment of the present invention.

### Solution to Problem

According to one aspect of the present invention, there is provided a prepreg comprising a thermosetting resin composition and a self-assembled carbon fiber bundle impregnated with the thermosetting resin composition.

According to another aspect of the present invention, there is provided a prepreg comprising a carbon fiber mat comprising a plurality of carbon fiber bundles including self-assembled carbon fiber bundles and a thermosetting resin composition, wherein the carbon fiber mat is impregnated with the thermosetting resin composition.

According to yet another aspect of the present invention, there is provided a method for producing a prepreg comprising impregnating a self-assembled carbon fiber bundle with a liquid thermosetting resin composition.

According to yet another aspect of the present invention, there is provided a method for producing a prepreg comprising impregnating a carbon fiber mat comprising a plurality of carbon fiber bundles including self-assembled carbon fiber bundles, with a liquid thermosetting resin composition.

According to yet another aspect of the present invention, there is provided a self-assembled carbon fiber bundle comprising a plurality of carbon fibers and an organic binder, wherein the fiber length of the plurality of carbon fibers is 60 mm or less, and wherein the plurality of carbon fibers contain no carbon fiber having a fiber length of less than 5 mm, or even when such a carbon fiber is contained therein, its content is less than 5 wt%.

According to yet another aspect of the invention, there is provided a method for producing a self-assembled carbon fiber bundle, wherein the method comprises mixing carbon fiber fluff and a bundling liquid to obtain a mixture; removing a liquid component of the bundling liquid from the mixture, wherein at least one of the carbon fiber fluff and the bundling liquid contains an organic binder, wherein all carbon fibers in the carbon fiber fluff have a fiber length of 60 mm or less, and wherein the carbon fiber fluff contain no carbon fiber having a fiber length of less than 5 mm, or even when such a carbon fiber is contained therein, its content is less than 5 wt%.

### Brief Description of Drawings

[Fig. 1] Figs. 1(a) to 1(d) are each an enlarged photograph showing an end of the SACFB.
[Fig. 2] Fig. 2 is an enlarged photograph showing an end of a chopped carbon fiber bundle.
[Fig. 3] Fig. 3 is a conceptual diagram of a sheet prepreg producing apparatus.
[Fig. 4] Fig. 4 is a photograph showing an appearance of the SACFB produced in Experiment 1.
[Fig. 5] Fig. 5 is a schematic diagram for explaining a relationship between a bundle length of the SACFB and a fiber length of a carbon fiber forming the SACFB. Description of Embodiments

The embodiments of the present invention will be described in detail below.

### 1. Self-assembled carbon fiber bundle (SACFB)

The SACFB is formed through a process in which a plurality of short carbon fibers gather to form a bundle spontaneously. All of the short carbon fibers may be monofilaments prior to forming the SACFB. That is, the SACFB can be formed by aggregating of a plurality of carbon fiber filaments into a bundle. In another example, the SACFB may be formed by aggregating of a plurality of fine carbon fiber bundles, each comprising a small number of filaments, eg, less than 100 filaments. In yet another example, the SACFB may be formed by aggregating of a plurality of carbon fiber filaments and a plurality of fine carbon fiber bundles.

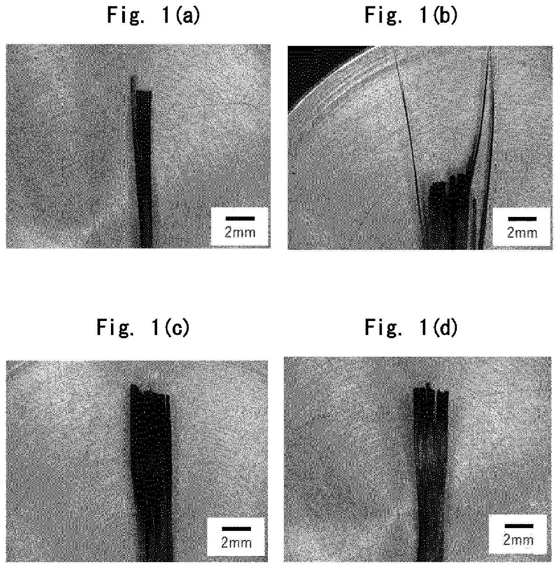

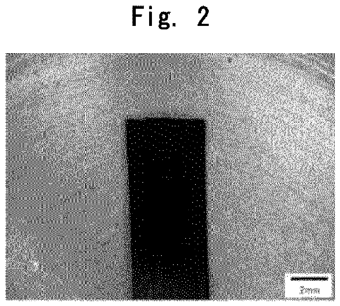

At an end of the SACFB, the tips of the plurality of carbon fibers comprising the bundle are unevenly positioned, as illustrated in Figs. 1(a)-(d). This is in contrast to an end of a chopped carbon fiber bundle obtained by cutting a continuous carbon fiber bundle, in which the positions of the tips of multiple carbon fibers are aligned as shown in Fig. 2.

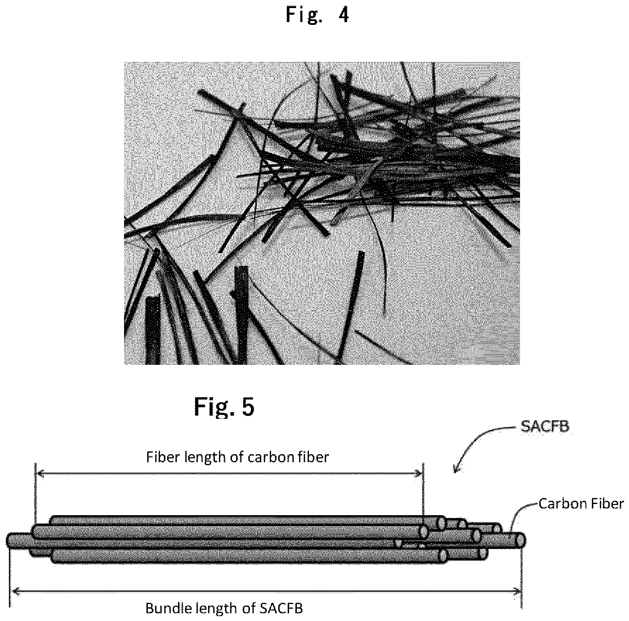

As shown in Fig. 5, a bundle length of the SACFB is generally longer than the number average fiber length of carbon fibers contained in the SACFB.

The number of carbon fibers contained in one SACFB (bundle size of the SACFB) is preferably in the range of 1.5K or more and less than 4.5K.

" K" here is a symbol representing 1000. For example, 1K means 1000. 10K means 10000. 100K means 100000.

The shorter the fiber length, the less entanglement occurs when carbon fibers are bundled by self-assembly, and the formed SACFB is easier to impregnate with resin. Therefore, in all the short carbon fibers constituting the SACFB, the fiber length is preferably 60 mm or less, more preferably 40 mm or less, even more preferably 30 mm or less, and may be 20 mm or less.

On the other hand, carbon fiber with too short a fiber length is less effective as a reinforcement when used in FRP. For this reason, the fiber length of carbon fibers constituting the SACFB is preferably 5 mm or more, more preferably 10 mm or more.

The bundle length of the SACFB usually exceeds 5 mm, when most of the carbon fibers contained therein have a fiber length of 5 mm or more. The SACFB typically has a bundle length of more than 10 mm, when most of the carbon fibers contained therein have a fiber length of 10 mm or more.

By limiting the contained amount of a carbon fiber less than a certain length, it is possible to enhance a reinforcing effect of the SACFB when it is used as a reinforcement for FRP. For example, it is preferable that the SACFB does not contain a carbon fiber having a fiber length of less than L, (mm), or even when such a carbon fiber is contained therein, its content is less than 5 wt% of the carbon fibers constituting the SACFB. Here, L₁ can be 5, 6, 7, 8, 9 or 10. The SACFB having a larger L₁ exhibits a higher reinforcing effect when used in an FRP.

In one example, by forming the SACFB only from carbon fibers having the same fiber length, it is possible to suppress variations in the quality of the SACFB between production lots. Among the plurality of carbon fibers constituting the SACFB, the difference between the maximum and minimum fiber lengths is preferably 5 mm or less, more preferably 4 mm or less, and even more preferably 3 mm or less.

There is no particular limitation on the filament diameter of the carbon fibers constituting the SACFB. That may be within the range of filament diameters that PAN-based carbon fibers normally have, for example, within the range of 5 *µ*m to 15 *µ*m.

The SACFB contains an organic binder that binds short carbon fibers to each other. A suitable example of the material for the organic binder is a resin used for sizing in a commercially available common carbon fiber bundle. In other words, it can be said to be a component resin of a sizing agent. Examples of such resins include, but are not limited to, epoxy resin, unsaturated polyester resin, vinyl ester resin (also called epoxy acrylate resin), polyurethane resin and polyamide resin. These resins may be used alone or in combination of two or more. The organic binder may be added with a surfactant in addition to the above resins. The organic binder may be the sizing agent itself used in common carbon fiber bundles.

The organic binder content of SACFB may be 0.5 wt% or more and less than 1.5 wt%, 1.5 wt% or more and less than 3 wt%, 3 wt% or more and less than 5 wt%, 5 wt% or more and less than 7 wt%, or 7 wt% or more and less than 10 wt%.

The carbon fibers constituting the SACFB may be all non-thermally degraded carbon fibers, or may be partially non-thermally degraded carbon fibers with the remainder thermally degraded carbon fibers. The carbon fibers constituting the SACFB may be all thermally degraded carbon fibers.

Non-thermally degraded carbon fibers are typically virgin carbon fibers.

Thermally degraded carbon fibers are typically recycled carbon fibers recovered from CFRP waste materials, which have been thermally degraded in the process of thermally decomposing and removing the matrix resin.

The SACFB preferably contains only carbon fibers as a fiber component. However, if there is no particular problem, it is allowed to contain fibers other than carbon fibers. For example, recycled carbon fibers containing glass fibers mixed therein may be preferably used as raw materials for SACFB with the mixed glass fibers still in them to the extent possible from the viewpoint of reducing the burden on the environment.

From the viewpoint of stabilizing the quality of the SACFB, the amount of fibers other than carbon fibers that can be contained in SACFB is preferably less than 10 wt%, more preferably less than 5 wt%, and even more preferably less than 1 wt% of the total fiber component.

### 2. Method for producing self-assembled carbon fiber bundle (SACFB)

Regarding the method of producing the SACFB, an embodiment using virgin carbon fiber as raw materials and an embodiment using recycled carbon fiber as raw materials will be explained.

### 2.1. Embodiment using virgin carbon fiber as raw material

The SACFB made of virgin carbon fiber can be produced, for example, through the following steps (i) to (iii).
(i) Chopping process
(ii) Loosening process
(iii) Bundling process

However, as described later, the loosening process (ii) can be omitted.

The details of each process are explained below.

### (i) Chopping process

In the chopping process, a continuous carbon fiber bundle formed of virgin carbon fiber, that is, a brand new continuous carbon fiber bundle is cut into a predetermined length using, for example, a rotary cutter to obtain a chopped carbon fiber bundle.

The bundle size of the continuous carbon fiber bundle (the number of carbon fiber filaments constituting the bundle) is, for example, 10K or more, and may be 12K or more, 15K or more, 24K or more, 36K or more, 48K or more, or 50K or more. Although there is no particular upper limit, it is, for example, 100K or less.

The larger the bundle size of the continuous carbon fiber bundle, the greater the number of SACFBs obtained from one piece of chopped carbon fiber bundle, so the production efficiency is high. In addition, the production cost of continuous carbon fiber bundles is also lower for larger bundle sizes. Therefore, the bundle size of the continuous carbon fiber bundle is preferably 24K or more, more preferably 36K or more, and even more preferably 48K or more.

The fiber length of the chopped carbon fiber bundle may be set according to the bundle length of the SACFB to be produced, and is not particularly limited, but is preferably 6 mm or more, 7 mm or more, 8 mm or more, 9 mm or more, and may be 10 mm or more. Also, it is preferably 60 mm or less, more preferably 40 mm or less, even more preferably 30 mm or less, and may be 20 mm or less. Most of the carbon fibers in the chopped carbon fiber bundle are retained in their length during the production of SACFB.

The bundle length of the SACFB, which is formed from a plurality of short carbon fibers mostly having the same fiber length, is approximately the same as or longer than the fiber length of the short carbon fibers. When substantially all short carbon fibers contained in the SACFB have a fiber length of L₂ (mm), the bundle length of the SACFB is often within the range of L₂+1 (mm) to L₂×1.4 (mm). However, there are exceptions.

In one example, chopped carbon fiber bundles having different fiber lengths may be mixed and used. However, in order to suppress variations in the quality of the SACFBs between production lots, it is preferable to use only chopped carbon fiber bundles having the same fiber length.

### (ii) Loosening process

In the loosening process, carbon fiber fluff is obtained by loosening the chopped carbon bundles obtained in the chopping process.

The carbon fiber fluff may consist of monofilaments, or may contain fine carbon fiber bundles formed of a small number of filaments, for example, less than 100 filaments.

The loosening can be performed preferably using, but not limited to, a common loosening machine.

For example, the loosening can be carried out by putting only the chopped carbon fiber bundles into an agitation mixer such as a Henschel mixer and stirring them in a dry state. In this case, the produced carbon fiber fluff can be used in the next bundling process without being taken out from the agitation mixer.

For example, the chopped carbon fiber bundles can also be loosened by dipping them in an organic solvent, such as acetone, that can dissolve the sizing agent contained in the chopped carbon fiber bundles, and then irradiating them with ultrasonic waves. After washing off the sizing agent, carbon fiber in fluffy form remains. Since at least part of the sizing agent contained in the chopped carbon fiber bundles is lost in this method, it is desirable to supplement the organic binder in the subsequent bundling process.

### (iii) Bundling process

In the bundling process, the short carbon fibers are spontaneously bundled by mixing the carbon fiber fluff obtained in the loosening process with the bundling liquid. After the bundling, liquid components in the bundling liquid are removed by evaporation.

A preferred liquid component contained in the bundling liquid is water. The strong surface tension of water strongly promotes the bundling of short carbon fibers due to the capillary effect. Moreover, since water is nonflammable, it is preferable in that an explosion-proof stirring device is not required.

The amount of the bundling liquid is, for example, 30 to 100 parts by weight with respect to 100 parts by weight of the short carbon fibers, but is not limited thereto. The amount of the bundling liquid can be appropriately adjusted while observing the state of the mixture.

An organic binder can be added to the bundling liquid as a dispersoid or a solute. When the organic binder is dispersed in the water-based bundling liquid, an organic solvent may be used as a dispersing aid.

When the amount of organic binder is sufficient, the bundle size distribution between SACFBs formed tends to be narrow. This is because formation of SACFBs with relatively small bundle sizes of less than 4.5K is promoted.

When setting the amount of the organic binder to be added to the bundling liquid, it is desirable to also consider the amount of sizing agent contained in the virgin carbon fiber bundles, the raw material. This is because the sizing agent remains in the final product, SACFB, while retaining its ability as an organic binder.

There is no limit to the method of mixing the carbon fiber fluff and the bundling liquid. Stirring is preferred for efficient mixing in a short time.

For stirring, an agitation mixer for powder known as a Henschel mixer can be preferably used. The agitation mixer may be of a type comprising only an agitator blade (stirring blade), or may be of a type with a chopper attached.

In one example, carbon fiber bundles produced by mixing carbon fiber fluff with a bundling liquid by stirring can be reformed by treating them with a tumbling granulator before removing the liquid component in the bundling liquid.

In another example, loosening and bundling by self-assembly can be performed at once by mixing the chopped carbon fiber bundles with the bundling liquid using an agitation mixer, omitting the loosening step. However, in order to produce the SACFB with stable quality, it is preferable to conduct the loosening process.

### 2.2. Embodiment using recycled carbon fiber

In the method of producing the SACFB described in 2.1. above, all or part of the virgin carbon fiber as raw material can be replaced with recycled carbon fiber.

A suitable example of recycled carbon fiber is carbon fiber recovered from CFRP scraps derived from products molded from SMC, or carbon fiber recovered from SMC offcuts. For example, the above-mentioned scraps or offcuts are preferably dry distilled at a temperature of 600°C or higher, and further heated to, for example, 550°C or higher, preferably 600°C or higher, under an oxidizing atmosphere to completely thermally decompose the matrix resin. This leaves behind fluffy recycled carbon fiber having a fiber length of 60 mm or less.

Recycled carbon fiber is thermally degraded and has lower strength than virgin carbon fiber, but it has sufficient strength to be used as a reinforcement for

### FRP.

Another method for recovering carbon fiber from CFRP waste is to decompose the matrix resin using a subcritical or supercritical fluid. The matrix resin is completely removed so that fluffy recycled carbon fibers are obtained. Resin residues that cannot be completely removed by this method may be removed by heat treatment in an oxidizing atmosphere. The recycled carbon fiber obtained by this method using the subcritical or supercritical fluid is also thermally degraded and therefore has lower strength than virgin carbon fiber.

As another method of recovering carbon fiber from CFRP waste materials, it is also possible to use a method including decomposing the matrix resin by microwave heating.

Another method for recovering carbon fiber from SMC offcuts is to wash out the uncured matrix resin using a solvent that may be a subcritical or supercritical fluid. According to this method, it is possible to obtain recycled carbon fiber that is not thermally degraded and has strength equivalent to that of virgin carbon fiber.

A recycled carbon fiber recovered from CFRP molded from SMC or SMC is a short fiber having a fiber length of 60 mm or less and does not require further cutting for use in the production of the SACFB. When this recycled carbon fiber is used as raw material still with the sizing agent removed, (ii) loosening process is also unnecessary, and only (iii) bundling process described above is required. The organic binder must be added to the bundling solution.

### 3. Prepreg

A prepreg can be produced by impregnating the SACFB with a liquid thermosetting resin composition.

Impregnation can be performed, for example, by immersing the SACFB in the liquid thermosetting resin composition.

The fiber content of the prepreg using the SACFB can be 20 wt% or more and less than 30 wt%, 30 wt% or more and less than 40 wt%, 40 wt% or more and less than 50 wt%, 50 wt% or more and less than 60 wt%, 60 wt% or more and less than 70 wt%, 70 wt% or more and less than 80 wt%, or 80 wt% or more and less than 90 wt%.

The higher the fiber content, the better the mechanical properties of CFRP obtained by curing the prepreg. The lower the fiber content, the easier the prepreg flows during pressure molding, so the degree of freedom in designing the shape of the CFRP product molded from the prepreg increases.

Examples of base resins for liquid thermosetting resin compositions include, but are not limited to, vinyl ester resin, unsaturated polyester resin, epoxy resin, polyimide resin, maleimide resin, and phenolic resin. One type or two or more types of thermosetting resin may be added to the liquid thermosetting resin composition.

A curing agent is usually added to the liquid thermosetting resin composition in addition to the base resin. In addition, a polymerization inhibitor, a thickener, a reactive diluent, a low-shrinkage agent, an antioxidant, an internal release agent, a coloring agent, a modifier (for example, a rubber, an elastomer or a thermoplastic resin), a flame retardant, an antimicrobial agent, etc. may be added to the liquid thermosetting resin composition if necessary.

The liquid thermosetting resin composition is preferably solvent-free, in other words, not a varnish. If it is a varnish, a process to remove the solvent by evaporation is required after impregnating the SACFB. Reactive diluents are not included in solvents here.

One suitable example of a non-varnish liquid thermosetting resin composition is a vinyl ester resin-based composition containing a vinyl ester resin, an unsaturated polyester resin, an ethylenically unsaturated monomer, a thickener, a polymerization initiator and a polymerization inhibitor added thereto.

Suitable examples of the vinyl ester resin are a bisphenol A type epoxy vinyl ester resin and a novolac vinyl ester resin. Either one of these may be used, or both may be used. The weight ratio of the vinyl ester resin to the unsaturated polyester resin to be used may be 1:9 to 9:1, 1:7 to 7:1, 1:4 to 4:1, 1:2 to 2:1, etc.

The ethylenically unsaturated monomer is used as a reactive diluent. At least one monofunctional ethylenically unsaturated monomer, at least one polyfunctional ethylenically unsaturated monomer, or both may be used.

A suitable example of a monofunctional ethylenically unsaturated monomer is styrene. Other examples include, but not limited to, monofunctional (meth)acrylates such as methyl (meth)acrylate, ethyl (meth)acrylate, propyl (meth)acrylate, butyl (meth)acrylate, 2-ethylhexyl (meth)acrylate, cyclohexyl (meth)acrylate, isobornyl (meth)Acrylates, benzyl (meth)acrylate, methylbenzyl (meth)acrylate, phenoxyethyl (meth)acrylate, methylphenoxyethyl (meth)acrylate, morpholine (meth)acrylate, phenylphenoxyethyl acrylate, phenylbenzyl(meth)acrylate, phenylmethacrylate, dicyclopentenyl(meth)acrylate, dicyclopentenyloxyethyl(meth)acrylate, and dicyclopentanyl methacrylate.

Examples of polyfunctional ethylenically unsaturated monomers include, but not limited to, difunctional (meth)acrylates such as ethylene glycol di(meth)acrylate, propylene glycol di(meth)acrylate, 1,4-butanediol di(meth)acrylate, 1,6-hexanediol di(meth)acrylate, bisphenol di(meth)acrylate, and 1,4-cyclohexanedimethanol di(meth)acrylate.

The thickener is polyisocyanate. Polyisocyanates are organic compounds with two or more isocyanate groups (-NCO) per molecule. Suitable examples of polyisocyanates are diisocyanates such as 2,4-toluene diisocyanate, 2,6-toluene diisocyanate, diphenylmethane diisocyanate, isophorone diisocyanate and hexamethylene diisocyanate.

The polymerization initiator includes organic peroxides that are commonly used as curing agents for vinyl ester resins and unsaturated polyester resins. The organic peroxides include, for example, ketone peroxides, hydroperoxides, diacyl peroxides, dialkyl peroxides, peroxyketals, alkyl per-esters, and percarbonates.

The polymerization inhibitor can be appropriately selected from various compounds generally known as polymerization inhibitors. Preferred examples include catechol, hydroquinone and benzoquinone.

Another suitable example of the non-varnish liquid thermosetting resin composition is an epoxy resin-based composition, in which an epoxy resin and an epoxy curing agent are blended, and if necessary, a thickener is further blended.

The types of the epoxy resins are not limited. Various types of epoxy resins including bisphenol-type epoxy resins, naphthalene-type epoxy resins, biphenyl-type epoxy resins, novolac-type epoxy resins, glycidylamine-type epoxy resins, epoxy resins having an oxazolidone ring structure, alicyclic epoxy resins, and aliphatic epoxy resins can be used.

In a preferred example, a bisphenol type epoxy resin such as a bisphenol A type epoxy resin or a bisphenol F type epoxy resin is used. Among commercially available bisphenol type liquid epoxy resins, there are varieties that have a low viscosity of 5 Pa·s or less at 25°C. 50 wt% or more. 60 wt% or more, 65 wt% or more, 70 wt% or 75 wt% or more of the total epoxy resin to be used may be a bisphenol type epoxy resin.

As the epoxy curing agent, it is preferable to use a latent curing agent.

The latent curing agent is a solid with low solubility in epoxy resin at room temperature, but when heated, it melts or dissolves in the epoxy resin to express its function as curing agent.

Various imidazoles, dicyandiamide, and boron trifluoride-amine complexes are typical examples of latent curing agents.

Imidazoles are compounds having an imidazole ring. Substituted imidazoles, in which the hydrogen atom of imidazole is substituted with a substituent, as well as imidazolium salts and imidazole complexes, are included in imidazoles.

Suitable examples of substituted imidazoles that act as latent curing agents include substituted imidazoles having an aromatic ring which may be a heteroaromatic ring in the molecule, such as 2,4-diamino-6-[2'-methylimidazolyl-(1')]-ethyl-s-triazine, 2-phenyl-4-methylimidazole, 2-phenyl-4-methyl-5-hydroxymethylimidazole, 2-phenyl-4-benzyl-5-hydroxymethylimidazole, 2-phenyl-4,5-dihydroxymethylimidazole, 2-p-toluyl-4-methyl-5-hydroxymethylimidazole, 2-paratoluyl-4,5-dihydroxymethylimidazole, 2-methatolyl-4-methyl-5-hydroxymethylimidazole, 2-methatolyl-4,5-dihydroxymethylimidazole and 1-cyanoethyl-2-phenylimidazole.

Also imidazolium salts such as 1-cyanoethyl-2-ethyl-4-methylimidazolium trimellitate, 1-cyanoethyl-2-undecylimidazolium trimellitate and 1-cyanoethyl-2-phenylimidazolium trimellitate are suitable examples of imidazole-based latent curing agents.

Isocyanuric acid adducts of various substituted imidazoles such as 2-phenylimidazole, 2-methylimidazole, 2-phenyl-4,5-dihydroxymethylimidazole and 2-phenyl-4-methyl-5-hydroxymethylimidazole, especially isocyanuric acid adducts of substituted imidazoles having a triazine ring such as 2,4-diamino-6-(2' -methylimidazolyl-(1'))-ethyl-s-triazine, 1-(4,6-diamino-s-triazin-2-yl)ethyl-2-undecylimidazole and 2,4-diamino-6-[2-(2-ethyl-4-methyl-1-imidazolyl)ethyl]-s-triazine are particularly preferred examples of imidazole-based latent curing agents.

Amine adducts are also a preferred example of latent curing agents. Amine adducts are obtained by reacting imidazole and/or tertiary amine with epoxy resin and/or isocyanate to increase the molecular weight, and have relatively low solubility in epoxy resin.

The latent curing agents may be used alone or in combination of two or more. When dicyandiamide is used as the latent curing agent, urea derivatives such as 4,4'-methylenebis(phenyldimethylurea) and 2,4-bis(3,3-dimethylureido)toluene are preferably used as curing accelerators.

In addition to or instead of the latent curing agents, epoxy curing agents other than latent curing agents, such as carboxylic acid anhydrides, aromatic amines and phenolic resins, can also be used.

Among the carboxylic anhydrides, methyltetrahydrophthalic anhydride, methylhexahydrophthalic anhydride and methyl-5-norbornene-2,3-dicarboxylic anhydride (methyl-3,6-endomethylene-1,2,3, 6-tetrahydrophthalic anhydride) have a viscosity of less than 0.5 Pa·s at 25°C, and thus may be used for the purpose of lowering the viscosity of the composition.

The carboxylic anhydride is known to react with epoxy compounds at low temperatures to form bonds with them through the catalytic action of tertiary amines, which may be glycidylamine. Therefore, when 20 weight parts or less of the carboxylic anhydride with respect to 100 weight parts of the epoxy compound is used with tertiary amine, the carboxylic acid anhydride acts as a thickening agent.

Amine compounds also act as thickening agents when used in amounts of 0.1 to 0.5 equivalents of active hydrogen per epoxy group. Examples of amine compounds that may preferably be used as thickener include, but are not limited to, isophoronediamine, bis(4-aminocyclohexyl)methane and 1,3-bis(aminomethyl)cyclohexane.

A polyisocyanate that may be a diisocyanate, particularly a diisocyanate having an aromatic ring in its molecular structure, such as bis(4-isocyanatophenyl) methane and toluenediisocyanate, is a suitable example of a thickener.

The polyisocyanate is preferably used with a polyol to exhibit a higher thickening effect. Examples of polyols include, but are not limited to ethylene glycol, polyethylene glycol, isosorbide, neopentyl glycol, cyclohexanediol, cyclohexanedimethanol, 1,4-butanediol, 1,5-pentanediol, 3-methyl-1,5-pentanediol and 1,6-hexanediol.

The following is an explanation of the flame retardant that can be added to the liquid thermosetting resin composition.

Preferred flame retardants include phosphorus-containing flame retardants.

Examples of phosphorus-containing flame retardants include non-halogen phosphoric acid esters such as trimethyl phosphate, triethyl phosphate, tributyl phosphate, trioctyl phosphate, tributoxyethyl phosphate, triphenyl phosphate, tricresyl phosphate, cresyl diphenyl phosphate, octyl diphenyl phosphate and aromatic polyphosphates.

Other examples of phosphorus-containing flame retardants include halogenated phosphoric acid esters such as tris(chloroethyl)phosphate, tris(dichloropropyl) phosphate, tris(chloropropyl)phosphate, bis(2,3-dibromopropyl)2,3-dichloropropylphosphate, tris(2,3-dibromopropyl)phosphate, bis(chloropropyl)octylphosphate, halogenated alkylpolyphosphate and halogenated alkylpolyphosphonate.

A further example of a phosphorus-containing flame retardant is a phosphinic acid metal salt. The phosphinic acid metal salts here include not only metal salts of phosphinic acids having no organic groups, but also metal salts of organic phosphinic acids such as diphenylphosphinic acid, monophenylphosphinic acid, dialkylphosphinic acid, monoalkylphosphinic acid, and alkylphenylphosphinic acid, as well as metal salts of diphosphinic acid such as methane-di(methylphosphinic acid) and benzene-1,4-di(methylphosphinic acid).

Examples of the dialkylphosphinic acids include dimethylphosphinic acid, ethylmethylphosphinic acid, diethylphosphinic acid, and methyl-n-propylphosphinic acid.

Examples of monoalkylphosphinic acids include methylphosphinic acid, ethylphosphinic acid, and n-propylphosphinic acid.

An example of an alkylphenylphosphinic acid is methylphenylphosphinic acid.

Phosphinic acid metal salts can be, but are not limited to, aluminum phosphinate, zinc phosphinate, calcium phosphinate, and magnesium phosphinate.

Further examples of phosphorus-containing flame retardants include red phosphorus, ammonium polyphosphate, melamine phosphate, guanidine phosphate, and guanylurea phosphate.

In addition to the phosphorus-containing flame retardant, a phosphorus-free flame retardant can be added to the liquid thermosetting resin composition. Examples of phosphorus-free flame retardants include melamine compounds such as melamine cyanurate, triazine compounds, guanidine compounds, nitrogen-based flame retardants such as ammonium phosphate and ammonium carbonate, hydrated metals such as aluminum hydroxide and magnesium hydroxide, and organometallic salt flame retardants such as ferrocene and acetylacetone metal complexes.

In a preferred example, halogen-free materials are selected for all materials, including flame retardants, to be added to the liquid thermosetting resin composition. Thereby, a halogen-free flame retardant SACFB prepreg is obtained.

An example of a prepreg that can be produced using the SACFB is a sheet prepreg. In a suitable example, a sheet prepreg can be produced through the following first to fourth steps.

First step: A step of applying a liquid thermosetting resin composition on respective surfaces of a first protective film and a second protective film.
Second step: A step of depositing a plurality of short carbon fiber bundles including the SACFB on the surface of the first protective film on which the liquid thermosetting resin composition has been applied to form a carbon fiber mat.
Third step: A step of laminating the second protective film to the first protective film so that the surfaces coated with the liquid thermosetting resin composition face each other, with the carbon fiber mat in between, to form a laminate.
Fourth step: A step of pressurizing the laminate to impregnate the carbon fiber mat with the liquid thermosetting resin composition to obtain a sheet prepreg.

The first protective film and the second protective film are synthetic resin films, and the material can be appropriately selected from polyolefins such as polyethylene and polypropylene, polyvinylidene chloride, vinyl chloride resin, polyamide, and the like. The first protective film and the second protective film may be multilayer films. The specifications of the first protective film and the second protective film may be the same or different.

In the second step, a carbon fiber mat is formed on the surface of the first protective film coated with the liquid thermosetting resin composition by depositing a plurality of short carbon fiber bundles including the SACFB, for example, by spraying.

The amount of the liquid thermosetting resin composition applied to the first protective film and the second protective film in the first step and the basis weight of the carbon fiber mat formed on the first protective film in the second step are adjusted considering the basis weight and fiber content of the sheet prepreg to be produced.

When the liquid thermosetting resin composition has been added with a thickener, the prepreg is aged after the fourth step until the viscosity of the liquid thermosetting resin composition becomes sufficiently high.

In the above procedure, the first protective film and the second protective film may be carrier films unwound from a roll.

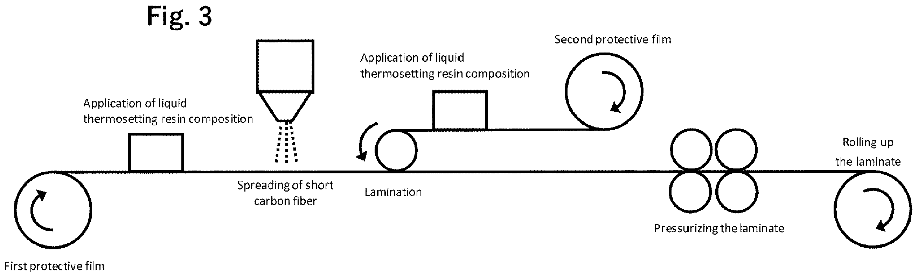

In a suitable example, a long sheet prepreg can be continuously produced using the sheet prepreg producing apparatus shown conceptually in Fig. 3.

The sheet prepreg producing apparatus shown in Fig.3 comprises a section for applying the liquid thermosetting resin composition to the first protective film being unwound from a roll, a section for spraying the short carbon fiber bundles on the first protective film to form the carbon fiber mat, a section for applying the liquid thermosetting resin composition to the second protective film being unwound from a roll, a section for laminating the second protective film onto the first protective film to form the laminate, a section for pressing the laminate, and a section for winding up the laminate.

The basis weight of the sheet prepreg using the SACFB can be appropriately designed depending on the purpose. The basis weight may be, for example, 300 g/m² or more and less than 500 g/m², 500 g/m² or more and less than 1000 g/m², 1000 g/m² or more and less than 2000 g/m², 2000 g/m² or more and less than 4000 g/m², 4000 g/m² or more and less than 6000 g/m², 6000 g/m² or more and less than 8000 g/m², or 8000 g/m² or more and less than 10000 g/m².

The thickness of the sheet prepreg can be designed to be, for example, 0.5 mm or more and less than 1.5 mm, 1.5 mm or more and less than 3 mm, or 3 mm or more and 5 mm or less, but is not limited thereto.

As a molding method when producing CFRP products from prepregs using the SACFB, although without limitation, a press molding method can be preferably used. For example, other molding methods, such as autoclave molding, can also be used.

### 4. Experimental results

The following are the results of experiments conducted by the present inventors.

### [Experiment 1]

A brand new continuous carbon fiber bundle made of carbon fibers with a filament diameter of 7 *µ*m, having a bundle size of 15 K, and containing 1 wt% of a sizing agent was cut with a rotary cutter to obtain chopped carbon fiber bundles having a fiber length of 25 mm (about 1 inch).

1000 g of the chopped carbon fiber bundles were placed in a mixing chamber of an agitation mixer "SP Granulator" (SPG-25T, manufactured by Dalton Co., Ltd.) and agitated without adding liquid to obtain carbon fiber fluff.

Without taking out the carbon fiber fluff, water was added to the mixing chamber of the agitation mixer so that the weight ratio of the carbon fiber fluff and water was 100:40, and the mixture was agitated for 7 minutes. The peripheral speed at the tip of the stirring blade was 4 m/s for the first 1 minute, 8 m/s for the next 3 minutes, and 4 m/s for the next 3 minutes.

After the completion of the agitation, the mixture was observed and it was found that short carbon fibers were spontaneously bundled. The mixture was dried at 110°C for 30 minutes using a vibrating hot-air dryer to obtain SACFBs.

Since no organic binder was added to the water used as the bundling liquid, the organic binder contained in this SACFB was only the sizing agent contained in the raw material continuous carbon fiber bundles. Since the entire amount of this sizing agent is considered to remain, the organic binder content of the obtained SACFB is 1 wt%.

A photograph of the appearance of the SACFB produced in Experiment 1 is shown in FIG. 4. The SACFB had a flat profile.

When three hundred SACFBs out of the obtained SACFBs were sampled and examined, about 80% in terms of number had a bundle size of less than 15K. The bundle size distribution of the SACFBs was wide, and when the frequency distribution of the bundle size was expressed with a class width of 1K, there was no class having the frequency of 10% or more.

When fifty out of the above three hundred SACFBs were examined, the majority of them had a bundle length in the range of 26 mm to 35 mm, that is, the length of the carbon fiber (25 mm) plus 1 mm to 1.4 times the length of the carbon fiber.

When the prepared SACFB was soaked in a liquid epoxy resin (manufactured by Mitsubishi Chemical, JER (registered trademark) 807) and left at room temperature for 3 days, the bundle loosened and more than doubled in width (long diameter of the cross section) as the resin penetrated between the filaments.

### [Experiment 2]

SACFBs were prepared in the same manner as in Experiment 1, except that a water dispersion containing a sizing agent for carbon fiber at a concentration of 2.5 wt% was used as the bundling liquid. Epoxy resin was contained in the sizing agent as the main component.

When combined with the sizing agent contained in the raw material continuous carbon fiber bundle, the organic binder content of the resulting SACFB is 2 wt%.

The appearance of the SACFB obtained in Experiment 2 was similar to that obtained in Experiment 1. The bundle size distribution of the SACFBs was narrower than that of Experiment 1. When sampling and examination were performed in the same way as Experiment 1, 90% in terms of number of the SACFBs had a bundle size of less than 8K, and the majority had a bundle size of 1.5K or more and less than 4.5K.

Furthermore, when fifty out of the sampled three hundred SACFBs were examined, 60% or more in terms of number had bundle sizes in the range of 26mm to 35mm.

### [Experiment 3]

A sheet prepreg was produced by impregnating the SACFBs produced in Experiment 2 with a liquid thermosetting resin composition containing a vinyl ester resin, an unsaturated polyester resin, styrene, a polyisocyanate, and a radical polymerization initiator.

The procedure was as follows.

Three polyethylene films of 40 cm × 40 cm (polyethylene films A to C) were provided, and two of them (polyethylene films A and B) were each coated with the paste made of the above liquid thermosetting resin composition in a 30 cm × 30 cm area on one side thereof.

Next, the SACFBs produced in Experiment 2 were sprinkled to deposit a carbon fiber mat on one polyethylene film (polyethylene film C) to which no paste was applied.

Next, one (polyethylene film A) of the polyethylene films coated with the above paste on one side was placed over the carbon fiber mat, with the side coated with the paste facing down.

Next, the stack were turned over upside down, such that the polyethylene film C, which was not coated with the paste, was placed on top, and the polyethylene film A was placed on the bottom. In this state, another polyethylene film B coated with the paste on one side was replaced with the polyethylene film C. By doing so, a laminate was obtained in which the two polyethylene films A and B coated with the paste were laminated together so that the sides coated with the paste faced each other with the carbon fiber mat sandwiched therebetween.

Subsequently, this laminate was pressed from both sides in the thickness direction to impregnate the carbon fiber mat with the paste.

After that, it was left at 25°C for 7 days to thicken the paste.

The obtained sheet prepreg had a basis weight of 2000 g/m² and a fiber content of 53 wt%.

Two 26 cm × 26 cm prepreg pieces cut out from the produced sheet prepregs were stacked and subjected to press-molding under the conditions of a temperature of 140°C, a pressure of 8 MPa, and a pressing time of 2 minutes to produce a CFRP plate having a length and width of 30 cm and a thickness of 2 mm.

A test piece having a width of 8 mm and a length of 60 mm was cut out from this CFRP plate, and flexural tests were conducted using a universal testing machine (Instron 4465, manufactured by Instron) with a crosshead speed of 2 mm/min and a span of 32 mm (16 times the thickness of the CFRP plate). The average of the measurement results of six test pieces showed a flexural strength of 360 MPa and a flexural modulus of 24 GPa.

### [Experiment 4]

A sheet prepreg having a basis weight of 2000 g/m² and a CF content of 53 wt% was produced in the same manner as in Experiment 3, except that the same chopped carbon fiber bundles as those produced in Experiment 1, that were chopped carbon fiber bundles having a fiber length of 25 mm (about 1 inch) obtained by cutting continuous carbon fiber bundles having a bundle size of 15K with a rotary cutter, were used as they were instead of SACFBs.

A CFRP plate was produced from this sheet prepreg in the same manner as in Experiment 3, and the mechanical properties of the CFRP plate were evaluated. The result were that flexural strength was 251 MPa and flexural modulus was 23 GPa.

### 5. Summary of Embodiments

Embodiments of the present invention include the following. However, they are not limited to these.
[Embodiment 1] A prepreg comprising a thermosetting resin composition and a self-assembled carbon fiber bundle impregnated with the thermosetting resin composition.
[Embodiment 2] The prepreg according to embodiment 1, wherein all of carbon fibers contained in the self-assembled carbon fiber bundle have a fiber length of 60 mm or less, 40 mm or less, 30 mm or less, or 20 mm or less.
[Embodiment 3] The prepreg according to embodiment 2, wherein at least a part of the carbon fibers have a fiber length of 5 mm or more.
[Embodiment 4] The prepreg according to embodiment 2, wherein at least a part of the carbon fibers have a fiber length of 10 mm or more.
[Embodiment 5] The prepreg according to any one of embodiments 2 to 4, wherein the carbon fibers contain no carbon fiber having a fiber length of less than 5 mm, or even when such a carbon fiber is contained therein, its content is less than 5 wt%.
[Embodiment 6] The prepreg according to embodiment 2 or 4, wherein the carbon fibers contain no carbon fiber having a fiber length of less than 10 mm, or even when such a carbon fiber is contained therein, its content is less than 5 wt%.
[Embodiment 7] The prepreg according to embodiment 4 or 6, wherein the difference between the maximum and minimum fiber lengths of the carbon fibers is within 5 mm, within 4 mm, or within 3 mm.
[Embodiment 8] The prepreg according to any one of embodiments 1 to 7, wherein the bundle size of the self-assembled carbon fiber bundle is within the range of 1.5K or more and less than 4.5K.
[Embodiment 9] The prepreg according to any one of embodiments 1 to 8, wherein the self-assembled carbon fiber bundle comprises a carbon fiber which has not been thermally degraded.
[Embodiment 10] The prepreg according to any one of embodiments 1 to 8, wherein the self-assembled carbon fiber bundle comprises a thermally degraded carbon fiber.
[Embodiment 11] The prepreg according to any one of embodiments 1 to 8, wherein all of carbon fibers contained in the self-assembled carbon fiber bundle are thermally degraded carbon fibers.
[Embodiment 12] The prepreg according to any one of embodiments 1 to 11, wherein the self-assembled carbon fiber bundle comprises at least one resin selected from the group consisting of epoxy resin, unsaturated polyester resin, vinyl ester resin, polyurethane resin and polyamide resin.
[Embodiment 13] The prepreg according to any one of embodiments 1 to 11, wherein the self-assembled carbon fiber bundle comprises an organic binder.
[Embodiment 14] The prepreg according to any one of embodiments 1 to 13, wherein at least one resin selected from the group consisting of vinyl ester resin, unsaturated polyester resin, epoxy resin, polyimide resin, maleimide resin and phenolic resin has been added to the thermosetting resin composition.
[Embodiment 15] The prepreg according to any one of embodiments 1 to 14, wherein a flame retardant has been added to the thermosetting resin composition.
[Embodiment 16] A method for producing a carbon fiber reinforced plastic product, comprising curing the prepreg according to any one of embodiments 1 to 15.
[Embodiment 17] A method for producing the prepreg according to any one of embodiments 1 to 15, wherein the method comprises impregnating the self-assembled carbon fiber bundle with a liquid thermosetting resin composition.
[Embodiment 18] A method for producing a prepreg comprising impregnating a carbon fiber mat comprising a plurality of carbon fiber bundles including one or more self-assembled carbon fiber bundles with a liquid thermosetting resin composition.
[Embodiment 19] The method for producing a prepreg according to embodiment 18, wherein the method comprises: applying the liquid thermosetting resin composition on respective surfaces of a first protective film and a second protective film; forming the carbon fiber mat on a surface of the first protective film to which the liquid thermosetting resin composition has been applied; forming a laminate by laminating the first protective film and the second protective film such that the surfaces coated with the liquid thermosetting resin composition face each other and the carbon fiber mat is sandwiched between them; and pressurizing the laminate to impregnate the carbon fiber mat with the liquid thermosetting resin composition.
[Embodiment 20] The method for producing a prepreg according to embodiment 18 or 19, wherein in at least one of said one or more self-assembled carbon fiber bundles, all of included carbon fibers have a fiber length of 60 mm or less, 40 mm or less, 30 mm or less or 20 mm or less.
[Embodiment 21] The method for producing a prepreg according to embodiment 20, wherein in said at least one of said one or more self-assembled carbon fiber bundles, at least a part of carbon fibers contained therein have a fiber length of 5 mm or more.
[Embodiment 22] The method for producing a prepreg according to embodiment 20, wherein in said at least one of said at least one or more self-assembled carbon fiber bundles, at least a part of included carbon fibers have a fiber length of 10 mm or more.
[Embodiment 23] The method for producing a prepreg according to any one of embodiments 20 to 22, wherein said at least one of said one or more self-assembled carbon fiber bundles contains no carbon fiber having a fiber length of less than 5 mm, or even when such a carbon fiber is contained therein, its content is less than 5 wt%.
[Embodiment 24] The method for producing a prepreg according to embodiment 20 or 22, wherein said at least one of said one or more self-assembled carbon fiber bundles contains no carbon fiber having a fiber length of less than 10 mm, or even when such a carbon fiber is contained therein, its content is less than 5 wt%.
[Embodiment 25] The method for producing a prepreg according to embodiment 22 or 24, wherein in said at least one of said one or more self-assembled carbon fiber bundles, the difference between the maximum and minimum fiber lengths of included carbon fibers is within 5 mm, 4 mm, or 3 mm.
[Embodiment 26] The method for producing a prepreg according to any one of embodiments 20 to 25, wherein said at least one of said one or more self-assembled carbon fiber bundles has a bundle size in the range of 1.5K or more and less than 4.5K.
[Embodiment 27] The method for producing a prepreg according to any one of embodiments 20 to 26, wherein said at least one of said one or more self-assembled carbon fiber bundles contains a carbon fiber which has not been thermally degraded.
[Embodiment 28] The method for producing a prepreg according to any one of embodiments 20 to 26, wherein said at least one of said one or more self-assembled carbon fiber bundles contains a thermally degraded carbon fiber.
[Embodiment 29] The method for producing a prepreg according to any one of embodiments 20 to 26, wherein in said at least one of said one or more self-assembled carbon fiber bundles, all of carbon fibers contained therein are thermally degraded carbon fibers.
[Embodiment 30] The method for producing a prepreg according to any one of embodiments 18 to 29, wherein the self-assembled carbon fiber bundle contains at least one resin selected from the group consisting of epoxy resin, unsaturated polyester resin, vinyl ester resin, polyurethane resin and polyamide resin.
[Embodiment 31] The method for producing a prepreg according to any one of embodiments 18 to 29, wherein the self-assembled carbon fiber bundle contains an organic binder.
[Embodiment 32] The method for producing a prepreg according to any one of embodiments 18 to 31, wherein the liquid thermosetting resin composition is solvent-free.
[Embodiment 33] The method for producing a prepreg according to any one of embodiments 18 to 32, wherein at least one resin selected from the group consisting of vinyl ester resin, unsaturated polyester resin, epoxy resin, polyimide resin, maleimide resin, and phenol resin has been added to the liquid thermosetting resin composition.
[Embodiment 34] The method for producing a prepreg according to any one of embodiments 18 to 33, wherein the liquid thermosetting resin composition is thickenable.
[Embodiment 35] The method for producing a prepreg according to any one of embodiments 18 to 34, wherein a flame retardant has been added to the liquid thermosetting resin composition.
[Embodiment 36] The method for producing a prepreg according to any one of embodiments 18 to 32, wherein a vinyl ester resin, an unsaturated polyester resin, an ethylenically unsaturated monomer, a polyisocyanate, a polymerization initiator and a polymerization inhibitor has been added to the liquid thermosetting resin composition.
[Embodiment 37] The method for producing a prepreg according to any one of embodiments 18 to 32, wherein an epoxy resin and an epoxy curing agent has been added to the liquid thermosetting resin composition.
[Embodiment 38] A prepreg produced by the method for producing according to any one of embodiments 18 to 37.
[Embodiment 39] A method for producing a carbon fiber reinforced plastic product, wherein the method comprises curing the prepreg according to embodiment 38.
[Embodiment 40] A method for producing a carbon fiber reinforced plastic product, wherein the method comprises producing a prepreg by the method for producing according to any one of embodiments 18 to 37, and curing the prepreg.
[Embodiment 41] A self-assembled carbon fiber bundle comprising a plurality of carbon fibers and an organic binder, wherein a fiber length of the plurality of carbon fibers is 60 mm or less, 40 mm or less, 30 mm or less or 20 mm or less.
[Embodiment 42] The self-assembled carbon fiber bundle according to embodiment 41, wherein at least a part of said plurality of carbon fibers have a fiber length of 5 mm or more.
[Embodiment 43] The self-assembled carbon fiber bundle according to embodiment 41, wherein at least a part of said plurality of carbon fibers have a fiber length of 10 mm or more.
[Embodiment 44] The self-assembled carbon fiber bundle according to any one of embodiments 41 to 43, wherein said plurality of carbon fibers contain no carbon fiber having a fiber length of less than 5 mm, or even when such a carbon fiber is contained therein, its content is less than 5 wt%.
[Embodiment 45] The self-assembled carbon fiber bundle according to embodiment 41 or 43, wherein said plurality of carbon fibers contain no carbon fiber having a fiber length of less than 10 mm, or even when such a carbon fiber is contained therein, its content is less than 5 wt%.
[Embodiment 46] The self-assembled carbon fiber bundle according to embodiment 43 or 45, wherein the difference between the maximum and minimum fiber lengths in said plurality of carbon fibers is within 5 mm, within 4 mm or within 3 mm.
[Embodiment 47] The self-assembled carbon fiber bundle according to any one of embodiments 41 to 46, having a bundle size in the range of 1.5K or more and less than 4.5K.
[Embodiment 48] The self-assembled carbon fiber bundle according to any one of embodiments 41 to 47, containing at least one resin selected from the group consisting of epoxy resin, unsaturated polyester resin, vinyl ester resin, polyurethane resin and polyamide resin.
[Embodiment 49] The self-assembled carbon fiber bundle according to any one of embodiments 41 to 48, having a content of the organic binder of 0.5 wt% or more and less than 1.5 wt%, 1.5 wt% or more and less than 3 wt%, 3 wt% or more and less than 5 wt%, 5 wt% or more and less than 7 wt%, or 7 wt% or more and less than 10 wt%.
[Embodiment 50] The self-assembled carbon fiber bundle according to any one of embodiments 41 to 49, containing a carbon fiber which has not been thermally degraded.
[Embodiment 51] The self-assembled carbon fiber bundle according to any one of embodiments 41 to 49, containing a thermally degraded carbon fiber.
[Embodiment 52] The self-assembled carbon fiber bundle according to any one of embodiments 41 to 49, wherein all of the plurality of carbon fibers are thermally degraded carbon fibers.
[Embodiment 53] A method for producing a prepreg comprising impregnating a carbon fiber mat with a liquid thermosetting resin composition, the carbon fiber mat comprising a plurality of carbon fiber bundles including the self-assembled carbon fiber bundle according to any one of embodiments 41 to 52.
[Embodiment 54] The method for producing a prepreg according to embodiment 53, wherein the method comprises: applying the liquid thermosetting resin composition on respective surfaces of a first protective film and a second protective film; forming the carbon fiber mat on the surface of the first protective film on which the liquid thermosetting resin composition has been applied; forming a laminate by laminating the first protective film and the second protective film such that the surfaces coated with the liquid thermosetting resin composition face each other and the carbon fiber mat is sandwiched between them; and pressurizing the laminate to impregnate the carbon fiber mat with the liquid thermosetting resin composition.
[Embodiment 55] The method for producing a prepreg according to embodiment 53 or 54, wherein the liquid thermosetting resin composition is solvent-free.
[Embodiment 56] The method for producing a prepreg according to any one of embodiments 53 to 55, wherein at least one resin selected from the group consisting of vinyl ester resin, unsaturated polyester resin, epoxy resin, polyimide resin, maleimide resin, and phenol resin has been added to the liquid thermosetting resin composition.
[Embodiment 57] The method for producing a prepreg according to any one of embodiments 53 to 56, wherein the liquid thermosetting resin composition is thickenable.
[Embodiment 58] The method for producing a prepreg according to any one of embodiments 53 to 57, wherein a flame retardant has been added to the liquid thermosetting resin composition.
[Embodiment 59] The method for producing a prepreg according to any one of embodiments 53 to 55, wherein a vinyl ester resin, an unsaturated polyester resin, an ethylenically unsaturated monomer, a polyisocyanate, a polymerization initiator and a polymerization inhibitor have been added to the liquid thermosetting resin composition.
[Embodiment 60] The method for producing a prepreg according to any one of embodiments 53 to 55, wherein an epoxy resin and an epoxy curing agent have been added to the liquid thermosetting resin composition.
[Embodiment 61] A prepreg produced by the method for producing according to any one of embodiments 53 to 60.
[Embodiment 62] A method for producing a carbon fiber reinforced plastic product, wherein the method comprises curing the prepreg according to embodiment 61.
[Embodiment 63] A method for producing a carbon fiber reinforced plastic product, wherein the method comprises producing a prepreg by the method for producing according to any one of embodiments 53 to 60, and curing the prepreg.
[Embodiment 64] A method for producing a self-assembled carbon fiber bundle, wherein the method comprises mixing carbon fiber fluff and a bundling liquid to obtain a mixture, and removing a liquid component of the bundling liquid from the mixture, wherein at least one of the carbon fiber fluff and the bundling liquid contains an organic binder, and wherein all carbon fibers contained in the carbon fiber fluff have a fiber length of 60 mm or less, 40 mm or less, 30 mm or less, or 20 mm or less.
[Embodiment 65] The method for producing according to embodiment 64, wherein at least a part of the carbon fibers contained in the carbon fiber fluff have a fiber length of 5 mm or more.
[Embodiment 66] The method for producing according to embodiment 64, wherein at least a part of the carbon fibers contained in the carbon fiber fluff have a fiber length of 10 mm or more.
[Embodiment 67] The method for producing according to any one of embodiments 64 to 66, wherein the carbon fiber fluff contains no carbon fiber having a fiber length of less than 5 mm, or even when such a carbon fiber is contained therein, its content is less than 5 wt%.
[Embodiment 68] The method for producing according to embodiment 64 or 66, wherein the carbon fiber fluff contains no carbon fiber having a fiber length of less than 10 mm, or even when such a carbon fiber is contained therein, its content is less than 5 wt%.
[Embodiment 69] The method for producing according to embodiment 66 or 68, wherein the difference between the maximum and minimum fiber lengths of the carbon fibers contained in the carbon fiber fluff is within 5 mm, within 4 mm, or within 3 mm.
[Embodiment 70] The method for producing according to any one of embodiments 64 to 69, wherein at least one of the carbon fiber fluff and the bundling liquid contains at least one resin selected from the group consisting of epoxy resin, unsaturated polyester resin, vinyl ester resin, polyurethane resin and polyamide resin.
[Embodiment 71] The method for producing according to any one of embodiments 64 to 70, wherein the bundling liquid contains water.
[Embodiment 72] The method for producing according to any one of embodiments 64 to 71, wherein at least the bundling liquid contains the organic binder.
[Embodiment 73] The method for producing according to any one of embodiments 64 to 72, wherein an agitation mixer is used for the mixing.
[Embodiment 74] The method for producing according to any one of embodiments 64 to 73, wherein the method comprises treating the mixture with a tumbling granulator prior to the removal of the liquid component.
[Embodiment 75] The method for producing according to any one of embodiments 64 to 74, wherein the carbon fiber fluff includes a carbon fiber which has not been thermally degraded.
[Embodiment 76] The method for producing according to any one of embodiments 64 to 74, wherein the carbon fiber fluff includes a thermally degraded carbon fiber.
[Embodiment 77] The method for producing according to any one of embodiments 64 to 74, wherein all of the carbon fibers contained in the carbon fiber fluff are thermally degraded carbon fibers.
[Embodiment 78] The method for producing according to any one of embodiments 64 to 76, wherein at least a part of the carbon fiber fluff is produced by loosening a chopped carbon fiber bundle.
[Embodiment 79] The method for producing according to embodiment 78, wherein an agitation mixer is used for the loosening.
[Embodiment 80] The method for producing according to embodiment 78 or 79, wherein a bundle size of the chopped carbon fiber bundle is 24K or more.
[Embodiment 81] The method for producing according to any one of embodiments 78 to 80, wherein the chopped carbon fiber bundle has been sized.
[Embodiment 82] A self-assembled carbon fiber bundle produced by the method for producing according to any one of embodiments 64 to 81.
[Embodiment 83] A method for producing a prepreg comprising impregnating the self-assembled carbon fiber bundle according to embodiment 82 with a liquid thermosetting resin composition.
[Embodiment 84] A method for producing a prepreg comprising impregnating a carbon fiber mat with a liquid thermosetting resin composition, the carbon fiber mat comprising a plurality of carbon fiber bundles including the self-assembled carbon fiber bundle according to embodiment 82.
[Embodiment 85] A method for producing a prepreg comprising producing a self-assembled carbon fiber bundle by the method for producing according to any one of embodiments 64 to 81, and impregnating the self-assembled carbon fiber bundle with a liquid thermosetting resin composition.
[Embodiment 86] A method for producing a prepreg comprising producing a self-assembled carbon fiber bundle by the method for producing according to any one of embodiments 64 to 81, forming a carbon fiber mat comprising a plurality of carbon fiber bundles including the self-assembled carbon fiber bundle, and impregnating the carbon fiber mat with a liquid thermosetting resin composition.
[Embodiment 87] The method for producing a prepreg according to embodiment 84 or 86, wherein the method comprises: applying the liquid thermosetting resin composition on respective surfaces of a first protective film and a second protective film; forming the carbon fiber mat on the surface of the first protective film on which the liquid thermosetting resin composition has been applied; forming a laminate by laminating the first protective film and the second protective film such that the surfaces coated with the liquid thermosetting resin composition face each other with and the carbon fiber mat is sandwiched between them; and pressurizing the laminate to impregnate the carbon fiber mat with the liquid thermosetting resin composition.
[Embodiment 88] The method for producing a prepreg according to any one of embodiments 83 to 87, wherein the liquid thermosetting resin composition is solvent-free.
[Embodiment 89] The method for producing a prepreg according to any one of embodiments 83 to 88, wherein at least one resin selected from the group consisting of vinyl ester resin, unsaturated polyester resin, epoxy resin, polyimide resin, maleimide resin, and phenol resin has been added to the liquid thermosetting resin composition.
[Embodiment 90] The method for producing a prepreg according to any one of embodiments 83 to 89, wherein the liquid thermosetting resin composition is thickenable.
[Embodiment 91] The method for producing a prepreg according to any one of embodiments 83 to 90, wherein a flame retardant has been added to the liquid thermosetting resin composition.
[Embodiment 92] The method for producing a prepreg according to any one of embodiments 83 to 88, wherein a vinyl ester resin, an unsaturated polyester resin, an ethylenically unsaturated monomer, a polyisocyanate, a polymerization initiator and a polymerization inhibitor have been added to the liquid thermosetting resin composition.
[Embodiment 93] The method for producing a prepreg according to any one of embodiments 83 to 88, wherein an epoxy resin and an epoxy curing agent has been added to the liquid thermosetting resin composition.
[Embodiment 94] A method for producing a carbon fiber reinforced plastic product, wherein the method comprises producing a prepreg by the method for producing according to any one of embodiments 83 to 93, and curing the prepreg.

Although the present invention has been described in detail using specific embodiments, it is clear to those skilled in the art that various changes can be made within the scope of achieving the effects of the invention.

The present application is based on Japanese Patent Application No. 2021-174789 filed on October 26, 2021, Japanese Patent Application No. 2021-101844 filed on June 18, 2021, Japanese Patent Application No. 2021-101845 filed on June 18, 2021 and Japanese Patent Application No. 2021-101846 filed on June 18, 2021, the entire contents of which are incorporated herein by reference.

### Industrial Availability

Prepregs using the SACFB can be preferably used when producing various CFRP products for automobiles, motorcycles, bicycles, ships, railroad cars, manned aircraft, unmanned aircraft and other transportation equipment, sporting goods, leisure goods, home appliances, agricultural equipment, construction materials, etc.

## Claims

1. A prepreg comprising a thermosetting resin composition and a self-assembled carbon fiber bundle impregnated with the thermosetting resin composition.

2. The prepreg according to claim 1, wherein all of carbon fibers contained in the self-assembled carbon fiber bundle have a fiber length of 60 mm or less, 40 mm or less, 30 mm or less, or 20 mm or less.

3. The prepreg according to claim 2, wherein at least a part of the carbon fibers have a fiber length of 5 mm or more.

4. The prepreg according to claim 2, wherein at least a part of the carbon fibers have a fiber length of 10 mm or more.

5. The prepreg according to any one of claims 2 to 4, wherein the carbon fibers contain no carbon fiber having a fiber length of less than 5 mm, or even when such a carbon fiber is contained therein, its content is less than 5 wt%.

6. The prepreg according to claim 2 or 4, wherein the carbon fibers contain no carbon fiber having a fiber length of less than 10 mm, or even when such a carbon fiber is contained therein, its content is less than 5 wt%.

7. The prepreg according to claim 4 or 6, wherein the difference between the maximum and minimum fiber lengths of the carbon fibers is within 5 mm, within 4 mm, or within 3 mm.

8. The prepreg according to any one of claims 1 to 7, wherein the bundle size of the self-assembled carbon fiber bundle is within the range of 1.5K or more and less than 4.5K.

9. The prepreg according to any one of claims 1 to 8, wherein the self-assembled carbon fiber bundle comprises a carbon fiber which has not been thermally degraded.

10. The prepreg according to any one of claims 1 to 8, wherein the self-assembled carbon fiber bundle comprises a thermally degraded carbon fiber.

11. The prepreg according to any one of claims 1 to 8, wherein all of carbon fibers contained in the self-assembled carbon fiber bundle are thermally degraded carbon fibers.

12. The prepreg according to any one of claims 1 to 11, wherein the self-assembled carbon fiber bundle comprises at least one resin selected from the group consisting of epoxy resin, unsaturated polyester resin, vinyl ester resin, polyurethane resin and polyamide resin.

13. The prepreg according to any one of claims 1 to 11, wherein the self-assembled carbon fiber bundle comprises an organic binder.

14. The prepreg according to any one of claims 1 to 13, wherein at least one resin selected from the group consisting of vinyl ester resin, unsaturated polyester resin, epoxy resin, polyimide resin, maleimide resin and phenolic resin has been added to the thermosetting resin composition.

15. The prepreg according to any one of claims 1 to 14, wherein a flame retardant has been added to the thermosetting resin composition.

16. A method for producing a carbon fiber reinforced plastic product, comprising curing the prepreg according to any one of claims 1 to 15.

17. A method for producing the prepreg according to any one of claims 1 to 15, wherein the method comprises impregnating the self-assembled carbon fiber bundle with a liquid thermosetting resin composition.

18. A method for producing a prepreg comprising impregnating a carbon fiber mat comprising a plurality of carbon fiber bundles including one or more self-assembled carbon fiber bundles with a liquid thermosetting resin composition.

19. The method for producing a prepreg according to claim 18, wherein the method comprises: applying the liquid thermosetting resin composition on respective surfaces of a first protective film and a second protective film; forming the carbon fiber mat on a surface of the first protective film to which the liquid thermosetting resin composition has been applied; forming a laminate by laminating the first protective film and the second protective film such that the surfaces coated with the liquid thermosetting resin composition face each other and the carbon fiber mat is sandwiched between them; and pressurizing the laminate to impregnate the carbon fiber mat with the liquid thermosetting resin composition.

20. The method for producing a prepreg according to claim 18 or 19, wherein in at least one of said one or more self-assembled carbon fiber bundles, all of included carbon fibers have a fiber length of 60 mm or less, 40 mm or less, 30 mm or less or 20 mm or less.

21. The method for producing a prepreg according to claim 20, wherein in said at least one of said one or more self-assembled carbon fiber bundles, at least a part of carbon fibers contained therein have a fiber length of 5 mm or more.

22. The method for producing a prepreg according to claim 20, wherein in said at least one of said at least one or more self-assembled carbon fiber bundles, at least a part of included carbon fibers have a fiber length of 10 mm or more.

23. The method for producing a prepreg according to any one of claims 20 to 22, wherein said at least one of said one or more self-assembled carbon fiber bundles contains no carbon fiber having a fiber length of less than 5 mm, or even when such a carbon fiber is contained therein, its content is less than 5 wt%.

24. The method for producing a prepreg according to claim 20 or 22, wherein said at least one of said one or more self-assembled carbon fiber bundles contains no carbon fiber having a fiber length of less than 10 mm, or even when such a carbon fiber is contained therein, its content is less than 5 wt%.

25. The method for producing a prepreg according to claim 22 or 24, wherein in said at least one of said one or more self-assembled carbon fiber bundles, the difference between the maximum and minimum fiber lengths of included carbon fibers is within 5 mm, 4 mm, or 3 mm.

26. The method for producing a prepreg according to any one of claims 20 to 25, wherein said at least one of said one or more self-assembled carbon fiber bundles has a bundle size in the range of 1.5K or more and less than 4.5K.

27. The method for producing a prepreg according to any one of claims 20 to 26, wherein said at least one of said one or more self-assembled carbon fiber bundles contains a carbon fiber which has not been thermally degraded.

28. The method for producing a prepreg according to any one of claims 20 to 26, wherein said at least one of said one or more self-assembled carbon fiber bundles contains a thermally degraded carbon fiber.

29. The method for producing a prepreg according to any one of claims 20 to 26, wherein in said at least one of said one or more self-assembled carbon fiber bundles, all of carbon fibers contained therein are thermally degraded carbon fibers.

30. The method for producing a prepreg according to any one of claims 18 to 29, wherein the self-assembled carbon fiber bundle contains at least one resin selected from the group consisting of epoxy resin, unsaturated polyester resin, vinyl ester resin, polyurethane resin and polyamide resin.

31. The method for producing a prepreg according to any one of claims 18 to 29, wherein the self-assembled carbon fiber bundle contains an organic binder.

32. The method for producing a prepreg according to any one of claims 18 to 31, wherein the liquid thermosetting resin composition is solvent-free.

33. The method for producing a prepreg according to any one of claims 18 to 32, wherein at least one resin selected from the group consisting of vinyl ester resin, unsaturated polyester resin, epoxy resin, polyimide resin, maleimide resin, and phenol resin has been added to the liquid thermosetting resin composition.

34. The method for producing a prepreg according to any one of claims 18 to 33, wherein the liquid thermosetting resin composition is thickenable.

35. The method for producing a prepreg according to any one of claims 18 to 34, wherein a flame retardant has been added to the liquid thermosetting resin composition.

36. The method for producing a prepreg according to any one of claims 18 to 32, wherein a vinyl ester resin, an unsaturated polyester resin, an ethylenically unsaturated monomer, a polyisocyanate, a polymerization initiator and a polymerization inhibitor has been added to the liquid thermosetting resin composition.

37. The method for producing a prepreg according to any one of claims 18 to 32, wherein an epoxy resin and an epoxy curing agent has been added to the liquid thermosetting resin composition.

38. A prepreg produced by the method for producing according to any one of claims 18 to 37.

39. A method for producing a carbon fiber reinforced plastic product, wherein the method comprises curing the prepreg according to claim 38.

40. A method for producing a carbon fiber reinforced plastic product, wherein the method comprises producing a prepreg by the method for producing according to any one of claims 18 to 37, and curing the prepreg.

41. A self-assembled carbon fiber bundle comprising a plurality of carbon fibers and an organic binder, wherein a fiber length of the plurality of carbon fibers is 60 mm or less, 40 mm or less, 30 mm or less or 20 mm or less.

42. The self-assembled carbon fiber bundle according to claim 41, wherein at least a part of said plurality of carbon fibers have a fiber length of 5 mm or more.

43. The self-assembled carbon fiber bundle according to claim 41, wherein at least a part of said plurality of carbon fibers have a fiber length of 10 mm or more.

44. The self-assembled carbon fiber bundle according to any one of claims 41 to 43, wherein said plurality of carbon fibers contain no carbon fiber having a fiber length of less than 5 mm, or even when such a carbon fiber is contained therein, its content is less than 5 wt%.

45. The self-assembled carbon fiber bundle according to claim 41 or 43, wherein said plurality of carbon fibers contain no carbon fiber having a fiber length of less than 10 mm, or even when such a carbon fiber is contained therein, its content is less than 5 wt%.

46. The self-assembled carbon fiber bundle according to claim 43 or 45, wherein the difference between the maximum and minimum fiber lengths in said plurality of carbon fibers is within 5 mm, within 4 mm or within 3 mm.

47. The self-assembled carbon fiber bundle according to any one of claims 41 to 46, having a bundle size in the range of 1.5K or more and less than 4.5K.

48. The self-assembled carbon fiber bundle according to any one of claims 41 to 47, containing at least one resin selected from the group consisting of epoxy resin, unsaturated polyester resin, vinyl ester resin, polyurethane resin and polyamide resin.

49. The self-assembled carbon fiber bundle according to any one of claims 41 to 48, having a content of the organic binder of 0.5 wt% or more and less than 1.5 wt%, 1.5 wt% or more and less than 3 wt%, 3 wt% or more and less than 5 wt%, 5 wt% or more and less than 7 wt%, or 7 wt% or more and less than 10 wt%.

50. The self-assembled carbon fiber bundle according to any one of claims 41 to 49, containing a carbon fiber which has not been thermally degraded.

51. The self-assembled carbon fiber bundle according to any one of claims 41 to 49, containing a thermally degraded carbon fiber.

52. The self-assembled carbon fiber bundle according to any one of claims 41 to 49, wherein all of the plurality of carbon fibers are thermally degraded carbon fibers.

53. A method for producing a prepreg comprising impregnating a carbon fiber mat with a liquid thermosetting resin composition, the carbon fiber mat comprising a plurality of carbon fiber bundles including the self-assembled carbon fiber bundle according to any one of claims 41 to 52.

54. The method for producing a prepreg according to claim 53, wherein the method comprises: applying the liquid thermosetting resin composition on respective surfaces of a first protective film and a second protective film; forming the carbon fiber mat on the surface of the first protective film on which the liquid thermosetting resin composition has been applied; forming a laminate by laminating the first protective film and the second protective film such that the surfaces coated with the liquid thermosetting resin composition face each other and the carbon fiber mat is sandwiched between them; and pressurizing the laminate to impregnate the carbon fiber mat with the liquid thermosetting resin composition.

55. The method for producing a prepreg according to claim 53 or 54, wherein the liquid thermosetting resin composition is solvent-free.

56. The method for producing a prepreg according to any one of claims 53 to 55, wherein at least one resin selected from the group consisting of vinyl ester resin, unsaturated polyester resin, epoxy resin, polyimide resin, maleimide resin, and phenol resin has been added to the liquid thermosetting resin composition.

57. The method for producing a prepreg according to any one of claims 53 to 56, wherein the liquid thermosetting resin composition is thickenable.

58. The method for producing a prepreg according to any one of claims 53 to 57, wherein a flame retardant has been added to the liquid thermosetting resin composition.

59. The method for producing a prepreg according to any one of claims 53 to 55, wherein a vinyl ester resin, an unsaturated polyester resin, an ethylenically unsaturated monomer, a polyisocyanate, a polymerization initiator and a polymerization inhibitor have been added to the liquid thermosetting resin composition.

60. The method for producing a prepreg according to any one of claims 53 to 55, wherein an epoxy resin and an epoxy curing agent have been added to the liquid thermosetting resin composition.

61. A prepreg produced by the method for producing according to any one of claims 53 to 60.

62. A method for producing a carbon fiber reinforced plastic product, wherein the method comprises curing the prepreg according to claim 61.

63. A method for producing a carbon fiber reinforced plastic product, wherein the method comprises producing a prepreg by the method for producing according to any one of claims 53 to 60, and curing the prepreg.

64. A method for producing a self-assembled carbon fiber bundle, wherein the method comprises mixing carbon fiber fluff and a bundling liquid to obtain a mixture, and removing a liquid component of the bundling liquid from the mixture, wherein at least one of the carbon fiber fluff and the bundling liquid contains an organic binder, and wherein all carbon fibers contained in the carbon fiber fluff have a fiber length of 60 mm or less, 40 mm or less, 30 mm or less, or 20 mm or less.

65. The method for producing according to claim 64, wherein at least a part of the carbon fibers contained in the carbon fiber fluff have a fiber length of 5 mm or more.

66. The method for producing according to claim 64, wherein at least a part of the carbon fibers contained in the carbon fiber fluff have a fiber length of 10 mm or more.

67. The method for producing according to any one of claims 64 to 66, wherein the carbon fiber fluff contains no carbon fiber having a fiber length of less than 5 mm, or even when such a carbon fiber is contained therein, its content is less than 5 wt%.

68. The method for producing according to claim 64 or 66, wherein the carbon fiber fluff contains no carbon fiber having a fiber length of less than 10 mm, or even when such a carbon fiber is contained therein, its content is less than 5 wt%.

69. The method for producing according to claim 66 or 68, wherein the difference between the maximum and minimum fiber lengths of the carbon fibers contained in the carbon fiber fluff is within 5 mm, within 4 mm, or within 3 mm.

70. The method for producing according to any one of claims 64 to 69, wherein at least one of the carbon fiber fluff and the bundling liquid contains at least one resin selected from the group consisting of epoxy resin, unsaturated polyester resin, vinyl ester resin, polyurethane resin and polyamide resin.

71. The method for producing according to any one of claims 64 to 70, wherein the bundling liquid contains water.

72. The method for producing according to any one of claims 64 to 71, wherein at least the bundling liquid contains the organic binder.

73. The method for producing according to any one of claims 64 to 72, wherein an agitation mixer is used for the mixing.

74. The method for producing according to any one of claims 64 to 73, wherein the method comprises treating the mixture with a tumbling granulator prior to the removal of the liquid component.

75. The method for producing according to any one of claims 64 to 74, wherein the carbon fiber fluff includes a carbon fiber which has not been thermally degraded.

76. The method for producing according to any one of claims 64 to 74, wherein the carbon fiber fluff includes a thermally degraded carbon fiber.

77. The method for producing according to any one of claims 64 to 74, wherein all of the carbon fibers contained in the carbon fiber fluff are thermally degraded carbon fibers.

78. The method for producing according to any one of claims 64 to 76, wherein at least a part of the carbon fiber fluff is produced by loosening a chopped carbon fiber bundle.

79. The method for producing according to claim 78, wherein an agitation mixer is used for the loosening.

80. The method for producing according to claim 78 or 79, wherein a bundle size of the chopped carbon fiber bundle is 24K or more.

81. The method for producing according to any one of claims 78 to 80, wherein the chopped carbon fiber bundle has been sized.

82. A self-assembled carbon fiber bundle produced by the method for producing according to any one of claims 64 to 81.

83. A method for producing a prepreg comprising impregnating the self-assembled carbon fiber bundle according to claim 82 with a liquid thermosetting resin composition.

84. A method for producing a prepreg comprising impregnating a carbon fiber mat with a liquid thermosetting resin composition, the carbon fiber mat comprising a plurality of carbon fiber bundles including the self-assembled carbon fiber bundle according to claim 82.

85. A method for producing a prepreg comprising producing a self-assembled carbon fiber bundle by the method for producing according to any one of claims 64 to 81, and impregnating the self-assembled carbon fiber bundle with a liquid thermosetting resin composition.

86. A method for producing a prepreg comprising producing a self-assembled carbon fiber bundle by the method for producing according to any one of claims 64 to 81, forming a carbon fiber mat comprising a plurality of carbon fiber bundles including the self-assembled carbon fiber bundle, and impregnating the carbon fiber mat with a liquid thermosetting resin composition.

87. The method for producing a prepreg according to claim 84 or 86, wherein the method comprises: applying the liquid thermosetting resin composition on respective surfaces of a first protective film and a second protective film; forming the carbon fiber mat on the surface of the first protective film on which the liquid thermosetting resin composition has been applied; forming a laminate by laminating the first protective film and the second protective film such that the surfaces coated with the liquid thermosetting resin composition face each other with and the carbon fiber mat is sandwiched between them; and pressurizing the laminate to impregnate the carbon fiber mat with the liquid thermosetting resin composition.

88. The method for producing a prepreg according to any one of claims 83 to 87, wherein the liquid thermosetting resin composition is solvent-free.

89. The method for producing a prepreg according to any one of claims 83 to 88, wherein at least one resin selected from the group consisting of vinyl ester resin, unsaturated polyester resin, epoxy resin, polyimide resin, maleimide resin, and phenol resin has been added to the liquid thermosetting resin composition.

90. The method for producing a prepreg according to any one of claims 83 to 89, wherein the liquid thermosetting resin composition is thickenable.

91. The method for producing a prepreg according to any one of claims 83 to 90, wherein a flame retardant has been added to the liquid thermosetting resin composition.

92. The method for producing a prepreg according to any one of claims 83 to 88, wherein a vinyl ester resin, an unsaturated polyester resin, an ethylenically unsaturated monomer, a polyisocyanate, a polymerization initiator and a polymerization inhibitor have been added to the liquid thermosetting resin composition.

93. The method for producing a prepreg according to any one of claims 83 to 88, wherein an epoxy resin and an epoxy curing agent has been added to the liquid thermosetting resin composition.

94. A method for producing a carbon fiber reinforced plastic product, wherein the method comprises producing a prepreg by the method for producing according to any one of claims 83 to 93, and curing the prepreg.
